# EUROPEAN PATENT SPECIFICATION

(11) **EP 0 362 882 B1**
(45) Date of publication and mention of the grant of the patent: **19.01.1994**
(21) Application number: 89118608.2
(22) Date of filing: 06.10.1989
(51) Int. Cl.: F16C 39/06

(54) **Magnetic bearing device**
Magnetlager
Palier magnétique

(30) Priority: 07.10.1988 JP 254620/88
(43) Date of publication of application: 11.04.1990
(73) Proprietor: NIPPON FERROFLUIDICS CORPORATION, Minato-Ku Tokyo 107 (JP)
(72) Inventor: Yamamura, Akira c/o Nippon Ferrofluidics Corp., Minato-ku Tokyo, 107 (JP)
(74) Representative: Strehl Schübel-Hopf Groening & Partner

(56) References cited:
- EP-A- 0 192 836
- DE-A- 2 355 104
- DE-A- 2 800 960
- GB-A- 2 109 596
- US-A- 4 642 501
- PATENT ABSTRACTS OF JAPAN vol. 8, no. 112 (M-298)(1549) 25 May 1984, & JP-A-59 19714 (TOKYO SHIBAURA DENKI K.K) 01 February 1984,
- PATENT ABSTRACTS OF JAPAN vol. 8, no. 195 (M-323)(1632) 07 September 1984, & JP-A-59 83828 (SEIKO DENSHI KOGYO K.K) 15 May 1984,

## Description

The present invention relates to a magnetic bearing device according to the preamble of claim 1.

Such a bearing device is disclosed in DE-A-23 55 104, which describes a system which does not contain a sensor coil.

US-A-4 642 501 discloses a magnetic suspension employing sensor means for sensing the magnetic flux density.

An object of the invention is to provide a magnetic bearing device of simple construction by which control characteristics are improved by the use of a control current, and an unbalanced spring constant due to a displacement of the armature disk is reduced.

These objects are met by the invention according to the characterising part of the claim.

The invention is further described taking reference to the attached drawings.
Figure 1 is a longitudinal sectional view showing an embodiment of the magnetic bearing device according to this invention;
Figure 2 is an equivalent circuit diagram of the above device; and
Figure 3 is a schematic diagram showing the working principle of the displacement detecting sensor;
With reference to the accompanying drawings, a preferred embodiment of the magnetic bearing device is hereinafter described.

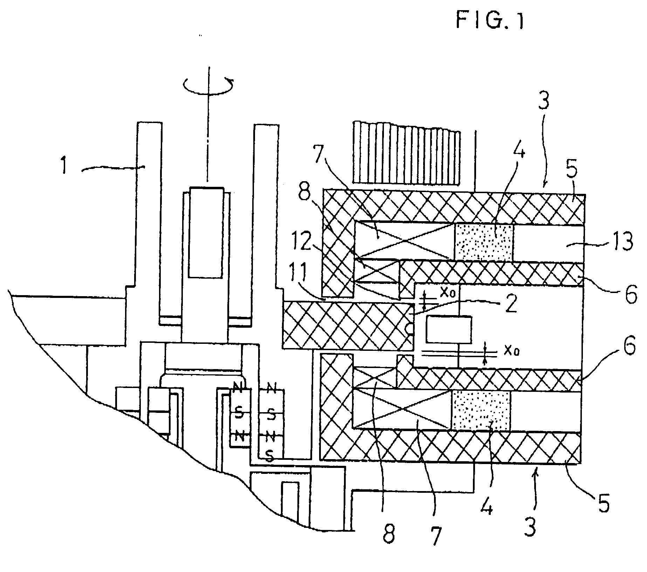

Referring to Figure 1, numeral 1 indicates a main rotary shaft which is rotably provided with an armature disk 2 thereby forming an integral one unit. A pair of bearing elements 3, 3 are disposed on opposite sides in the axial direction of the armature disk 2 putting the disk 2 therebetween. Each of the bearing elements 3, 3 comprises a pair of pole pieces 5, 6 mounted on two pole faces of a permanent magnet 4. Each of the pole pieces 5, 6 has a part extending in parallel with the armature disk 2 and a top end part further extending from the mentioned part to a position adjacent the armature disk. A control coil 7 is disposed between the mentioned pair of pole pieces 5, 6 at a position nearer to front end side than the permanent magnet 4. A sensor coil 8 is disposed at a position further nearer to front end side than the mentioned control coil 7. The sensor coil 8 is wound in the same direction as the mentioned control coil 7.

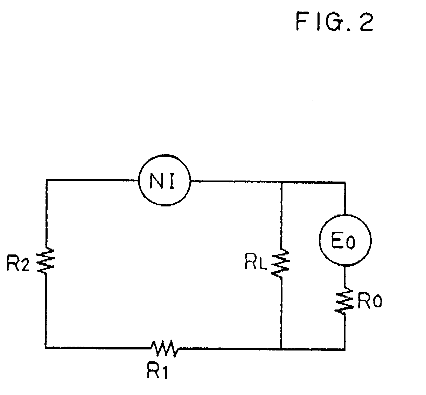

In the magnetic bearing device of above construction, first and second gaps 11, 12 are respectively formed on the tip end sides of the pole pieces 5, 6, and a leakage magnetic path 13 is formed on the base end sides of the pole pieces 5, 6, of which the equivalent circuit is shown in Figure 2. In this circuit diagram, reference EO indicates magnetomotive force of the permanent magnet 4, RO indicates internal magnetic resistance thereof, RL indicates magnetic resistance for leakage flux, R1 indicates magnetic resistance for the first gap 11, and R2 indicates magnetic resistance for the second gap 12.

In the construction described above, unbalance spring constant as a result of displacement of the armature disk 2 is in proportion to the following expression:

$\text{1/[1 + RO/(1 + RO/R1 )(R1 = R2)]}$

Controlling force is in proportion to the following expression:

$\text{EO·NI/R}$

$\text{R = (R1 + R2)² (1 + RO/RL) + 2RO(R1 + R2) + RO²/(1 + R2/RL)}$

Accordingly, maximum value is obtained at the time of 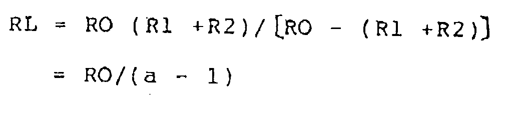
where: RO = a(R1 + R2)
The magnetic resistance of the magnetic path of the control coil 7 can be optimized by enlarging the gap between pole faces N and S of the permanent magnet 4, increasing the internal magnetic resistance RO (for instance, by forming the pole pieces 5, 6 of some soft magnetic substance) and forming leakage path of the permanent magnet 4. Control characteristics with a control current can be improved by disposing the control coil 7 on the side nearer to front end than the permanent magnet 4, As a result of this, not only an unbalanced spring constant due to the displacement of the armature disk can be reduced, but also the entire construction can be simplified.

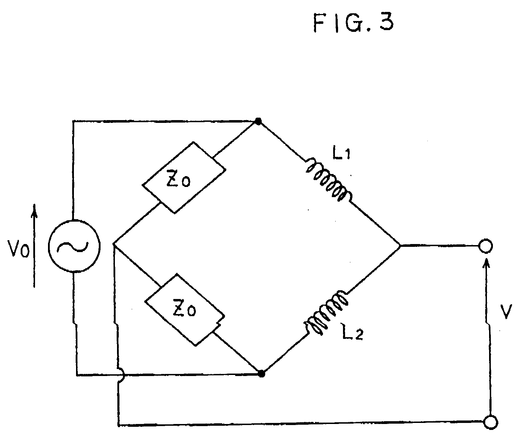

Figure 3 is a schematic diagram showing the principle of the displacement detection by a displacement detecting sensor. The displacement detecting sensor comprises the sensor coil 8 and the armature disk 2 (magnetic substance), and a high frequency current (about 50 KHz) is applied to the coil 8. When the distance between the sensor coil 8 and the armature disk 2 changes, inductance of the coil 8 varies in such a manner that amplitude of the high frequency applied to the coil 8 is modulated. Such modulated amount is detected by a detector as displacement. A detector circuit is formed into a bridge comprising two impedances Z0, Z0 and two sensor coils L1, L2 so that displacement signal is outputted by the detection circuit, after differentially detecting modulated amount.

Noise at the time of operating the control coil 7 and this sensor coil 8 together is not extremely high, despite the fact that a strong magnetic field is generated in the control coil 7, when its attractive force is increased, though the amount of inductance variation reaches a certain value. This is because the sensor coil 8 is distant from the armature disk 2. On the other hand, also in the control coil 7, when its attractive force is decreased, the amount of inductance variation of the sensor coil 8 is almost the same as the mentioned certain value, despite the fact that magnetic field generated is not so strong. This is because the distance between the sensor coil 8 and the armature disk 2 is shorter. In this manner, adoption of the differential detection system described above makes it possible to offset the amount of variation, and there is no detection in the form of a displaced component, resulting in accurate and precise detection of displacement.

Establishing that:
- L1, L2:: inductances of sensor coil,
- Z0:: reference impedance of bridge,
- µ :: magnetic permeability of gap,
- S:: sectional area of magnetic core,
- x0:: distance to sensor target at balanced point,
- x:: dsplacement from x0, and
- w:: angular frequency of voltage V0 applied to coil,
output volatge V of the bridge is expressed as follows: 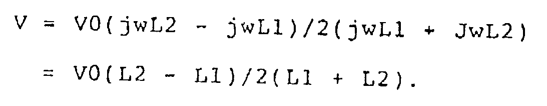
Then, further establishing that: 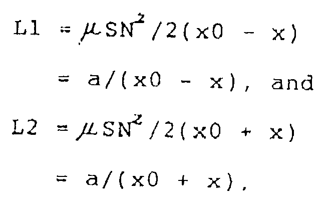
a following expression is obtained:

$\text{V = -V0 x/2 x 0}$

Accordingly, an electric signal in proportion to displacement can be obtained. Since V is a high frequency voltage of several 10 Khz of which amplitude is in proportion to displacement, any displacement signal can be outputted by eliminating the high frequency component through detection.

As described above, in the axial displacement detection mechanism of this embodiment, since the sensor coil 8 has its magnetic path in common with the control coil 7, space can be saved. Furthermore, as a result of employing the differential detection mechanism as described above, output of the sensor is zero when the armature disk 2 is in the center between the two bearing elements 3, 3. Thus, not only irregularity among individual components can be reduced but also linear sensor output with respect to displacement can be obtained.

In the magnetic bearing device of the above construction according to the invention, not only control characteristics with control current are improved but also unbalance spring constant due to displacement of armature disk can be reduced. Furthermore, construction of the device can be simplified.

## Claims

1. A magnetic bearing device comprising a rotary main shaft (1), an armature disk (2) mounted on said rotary main shaft (1), and a pair of bearing elements (3) disposed on opposite sides in the axial direction of said armature disk (2), each of said bearing elements (3) comprising a control coil (7) provided with pole pieces (5, 6),
characterized in that each bearing element (3) is provided with a permanent magnet (4) and a pair of pole pieces (5, 6), wherein the two pole pieces (5, 6) each having a part defining a gap (13) of constant width therebetween and a top end part extending from the mentioned part to a position adjacent the armature disk (2), the control coil (7) is disposed between the two parts defining the gap (13) of the two pole pieces (5, 6) nearer to the top end parts, such that between the two parts defining the gap (13) a magnetic leakage path is defined, and a sensor coil (8) is disposed between said pole pieces (5, 6) at a position nearer to the top end than said control coil.

2. The device of claim 1, wherein the parts of the pole pieces (5, 6) which define the gap (13) therebetween extend in parallel to the armature disk (2).

## Patentansprüche

1. Magnetische Lager-Vorrichtung mit einer rotierenden Hauptwelle (1), einer auf der rotierenden Hauptwelle (1) montierten Läuferscheibe (2) und einem Paar Lagerelemente (3), die auf in Axialrichtung gegenüberliegenden Seiten der Läuferscheibe (2) angeordnet sind, wobei jedes Lagerelement (3) eine Steuerspule (7) umfaßt,
dadurch gekennzeichnet, daß jedes Lagerelement (3) mit einem Permamentmagnet (4) und einem Paar Polstücke (5, 6) versehen ist, wobei die zwei Polstücke (5, 6) jeweils ein Teil, zwischen denen ein Spalt (13) von konstanter Breite definiert ist, und ein vorderes Endteil haben, das sich vom erwähnten Teil bis zu einer der Läuferscheibe (2) gegenüberliegenden Position erstreckt, wobei die Steuerspule (7) zwischen denjenigen, den Spalt (13) definierenden Teilen der zwei Polstücke (5, 6) näher an den oberen Endteilen angeordnet ist, so daß zwischen den beiden den Spalt (13) definierenden Teilen ein magnetischer Streupfad definiert ist, und eine Sensorspule (8) zwischen den Polstücken (5, 6) an einer Position angeordnet ist, die näher am Vorderende als die Steuerspule angeordnet ist.

2. Vorrichtung gemäß Anspruch 1, wobei sich die Teile der Polstücke (5, 6), die den Spalt (13) zwischen sich definieren, parallel zur Läuferscheibe (2) erstrecken.

## Revendications

1. Dispositif formant palier magnétique comportant un arbre principal rotatif (1), un disque d'armature (2) monté sur ledit arbre principal rotatif (1) et une paire d'éléments (3) de palier disposés axialement de part et d'autre dudit disque d'armature (2), chacun desdits éléments (3) de palier comportant une bobine de commande (7) munie de pièces polaires (5, 6),
caractérisé en ce que chaque élément (3) de palier est muni d'un aimant permanent (4) et d'une paire de pièces polaires (5, 6), dans lequel les deux pièces polaires (5, 6) ont chacune une partie définissant un entrefer (13) de largeur constante entre celles-ci et une extrémité supérieure qui s'étend depuis la partie précitée jusqu'au voisinage immédiat du disque d'armature (2), la bobine de commande (7) est disposée entre les deux parties définissant l'entrefer (13) des deux pièces polaires (5, 6) les plus proches des extrémités supérieures, de façon qu'entre les deux parties définissant l'entrefer (13) soit constitué un parcours de fui tes magnétiques, et une bobine de détection (8) est disposée entre lesdites pièces polaires (5, 6), plus près de l'extrémité supérieure que ladite bobine de commande.

2. Dispositif selon la revendication 1, dans lequel les parties des pièces polaires (5, 6) qui définissent entre celles-ci l'entrefer (13) s'étendent parallèlement au disque d'armature (2).
